# EUROPEAN PATENT SPECIFICATION

(11) **EP 3 474 520 B1**
(45) Date of publication and mention of the grant of the patent: **30.12.2020**
(21) Application number: 18206056.6
(22) Date of filing: 05.09.2006
(51) Int. Cl.: H04L 29/08, H04M 1/725

(54) **SMART ARTEFACT AND USER TERMINAL HAVING A SHORT RANGE INTERFACE AND LONG RANGE INTERFACE**
INTELLIGENTES ARTEFAKT UND BENUTZERENDGERÄT MIT EINER KURZBEREICHSSCHNITTSTELLE UND WEITBEREICHSSCHNITTSTELLE
ARTEFACT INTELLIGENT ET TERMINAL UTILISATEUR COMPRENANT UNE INTERFACE COURTE PORTÉE ET UNE INTERFACE À LONGUE PORTÉE

(43) Date of publication of application: 24.04.2019
(62) Document number(s) of the earlier application(s) in accordance with Art. 76 EPC: 16157385.2 / 3 054 653; 06291415.5 / 1 898 598
(73) Proprietor: Alcatel Lucent, 91620 Nozay (FR)
(72) Inventor: TRAPPENIERS, Lieven, 2018 Antwerpen (BE); GODON, Marc, 2018 Antwerpen (BE)
(74) Representative: Mudge, Kevin

(56) References cited:
- EP-A- 1 622 346
- WO-A-2004/003801
- US-A1- 2003 088 496
- US-A1- 2004 203 352
- US-A1- 2006 071 778
- KAMIOKA E ET AL: "A User-Driven Device Handover System in PAN Environments", MOBILE DATA MANAGEMENT, 2006. MDM 2006. 7TH INTERNATIONAL CONFERENCE O N NARA, JAPAN 10-12 MAY 2006, PISCATAWAY, NJ, USA,IEEE, 10 May 2006 (2006-05-10), pages 56-56, XP010917930, DOI: 10.1109/MDM.2006.24 ISBN: 978-0-7695-2526-6
- PENTTILA K ET AL: "Use and interface definition of mobile RFID reader integrated in a smart phone", CONSUMER ELECTRONICS, 2005. (ISCE 2005). PROCEEDINGS OF THE NINTH INTERNATIONAL SYMPOSIUM ON MACAU SAR 14-16 JUNE 2005, PISCATAWAY, NJ, USA,IEEE, 14 June 2005 (2005-06-14), pages 353-358, XP010832175, ISBN: 0-7803-8920-4

## Description

### Field of the Invention

The present invention generally relates to interactive sessions between smart artefacts, e.g. public displays, whiteboards or billboards, and user terminals such as mobile phones, PDAs, laptops, etc. Such interactive sessions enable downloading content to the user terminal, like a word, event date, a number, photo, drawing, ring tone, game, a video, an URL, etc., or enable controlling the information that is made accessible or visible through the smart artefact.

### Background of the Invention

One way to categorize prior art interactive artefacts and user terminals is to distinguish between solutions with plural zones of interaction and solutions with a single zone of interaction.

GossipWall and ViewPort, described in the article "Situated Interaction with Ambient Information: Facilitating Awareness and Communication in Ubiquitous Work Environments" from the authors Norbert Streitz, Carsten Rocker, Thorsten Prante, Richard Stenzel and Daniel van Alphen, for instance describes an artefact with sensing technology, i.e. the GossipWall display, and a user terminal with sensing technology, i.e. the ViewPort device, which interact in three zones depending on the distance of the ViewPort from the GossipWall: the Interactive zone, the Notification zone, and the Ambient zone. The GossipWall thereto includes two independent RFID sensors that sense presence of a ViewPort device respectively within the Interactive zone and the Notification zone. When a ViewPort device is sensed within the Interactive zone, interaction becomes possible with each independent pixel or cell of the GossipWall display. When a ViewPort device is sensed within the Notification zone, the GossipWall can "borrow" the ViewPort device and use it to provide personal information to the user, e.g. information relating to the patterns displayed on the GossipWall. When a ViewPort device passes outside the Interactive or Notification zones, i.e. in the Ambient zone where it is not sensed, the GossipWall display shall show general information and no interaction is possible. A more detailed explanation of GossipWall and ViewPort can be found in the above cited article which is downloadable from the Internet via the following URL:
http://www.ipsi.fraunhofer.de/ambiente/paper/2003/HCII-2003-Streitz.et.al.-final.pdf

A similar system is Hello.Wall, another wall-sized ambient display that interacts with user terminals such as the ViewPort depending on the distance from the individual holding the user terminal to the wall. Hello.Wall is described in a publication entitled "Ambient Agoras - InfoRiver, SIAM, Hello.Wall" from Thorsten Prante et. al., downloadable via URL:
http://www.ipsi.fraunhofer.de/ambiente/paper/2004/AmbientAgoras-CHI04-prante.pdf
   and in a second Internet publication entitled "Ambient Agoras" that is accessible through URL:
http://www.ipsi.fraunhofer.de/ambiente/material/pictures/

A drawback of the above described solutions based on plural interaction zones, is that an interactive session between the smart artefact and the user terminal cannot be conveyed from one zone to another. Upon entrance of a new zone, the interaction mode between the user terminal and artefact will change automatically.

Another disadvantage of the known prior art systems is that there is no explicit selection by the user of the artefact to interact with. As soon as the user terminal is within a certain proximity of the artefact, interaction is established automatically. Even if the ViewPort user is only passing by and doesn't wish to interact with the smart display, the GossipWall will detect presence of the ViewPort device and automatically select it for interaction, resulting for instance in general information being replaced with personal information on the display.

The lack of explicit selection becomes even more disturbing in a scenario where many smart artefacts are around. Depending on the respective distances to the user terminal, all these artefacts may start interacting with the user terminal, whereas the user only prefers to select a specific one.

An example prior art system with only one interaction zone is Polyvision's Walk-and-Talk Lightning interactive whiteboard that is accompanied by a user terminal, i.e. the Walk-and-Talk board that serves as intuitive remote control and allows projecting, writing, erasing, saving, and printing the whiteboard presentation, as well as accessing the web. The Walk-and-Talk Lightning interactive whiteboard is advertised at the following URL:
http://www.polyvision.com/media/product_sheets/Walk-and-Talk-Lightning-Product-Sheet.pdf

Another single zone interactive artefact may be realized through the Hypertag, which is a small electronic tag that is attached to an advert or public sign enabling infra-red or Bluetooth based mobile phones and PDAs to interact with the tagged poster panel, billboard, etc. and download a phone number, reminder prompt, a game, a logo, a picture, a ring-tone, etc. The Hypertag platform is advertised at:
http://www.hypertag.com/

Although the selection may be more explicit, e.g. a Bluetooth connection may have to be established and authenticated between the user terminal and the public artefact, the single zone solutions enabling interaction between a smart artefact and a user terminal still suffer from the drawback that an interactive session between terminal and artefact cannot be ported outside the short range zone wherein the session is initiated, e.g. through Bluetooth or line of sight connectivity such as infra-red interfaces.

It is an object of the invention to provide a smart artefact and user terminal that overcomes the above listed shortcomings of prior art solutions. In particular, it is an objective to disclose a smart artefact and user terminal that are able to extend an interactive session beyond predefined zones. Further, it is an objective to enable explicit selection of the smart artefact(s) with whom a user terminal enters into an interactive session, in particular in the vicinity of plural smart artefacts.

### Summary of the Invention

According to the invention, the above object is realized and the shortcomings of the prior art solutions are overcome by the smart artefact defined in claim 1, having
first interfacing means, active within a short range, for initiating an interactive session with a user terminal,
second interfacing means, active within a longer range, for continuing the interactive session with the user terminal, and
means for transferring the interactive session from the first interfacing means towards the second interfacing means.

Thus, by initiating a session through a short range interface, e.g. through touching the artefact with an adapted user terminal, and by transferring the session from a first interface to a second interface, e.g. through handover of the session to a long range RF interface, the interactive communication between the artefact and the user terminal is extended beyond the zone wherein the first, short range interface is active. In addition, the short range interface may establish a means for explicit selection of the artefact in a clear and intuitive way. This is in particular the case when the first interface contains haptic or tactile aspects requiring the user to touch the artefact in order to initiate the interaction.

The current invention in addition relates to a user terminal as defined in claim 4, having:
first interfacing means, active within a short range, for initiating an interactive session with a smart artefact,
second interfacing means, active within a longer range, for continuing the interactive session with the smart artefact, and
means for transferring the interactive session from the first interfacing means towards the second interfacing means.

Such a user terminal is able to enter into interactive sessions with the smart artefact defined in claim 1 in a way as described above. The handover between the short range interface and the long range interface may be user terminal controlled or user terminal assisted when a mobility proxy performs network controlled handover between the interfaces. The handover for instance may consist in authenticating with the long range communication network or service whilst being connected with the smart artefact over the short range interface, simultaneously performing a packet data session establishment procedure over the long range interface in the user terminal and the smart artefact whilst remaining connected over the short range interface, and exchanging parameters between the two interfaces in the user terminal and smart artefact. The exchange of parameters may for instance involve assistance of a mobility proxy, like a mobility SIP (Session Initiation Protocol) proxy that transports the parameters according to the SHP (Session Handover Protocol), a residual protocol of SIP that transports the parameters as attachments to SIP messages.

As is indicated by claim 2, the first, short range interfacing means may optionally be a touch-based interface, a Radio Frequency Identification (RFID) tag, a Radio Frequency Identification (RFID) tag reader, a barcode, a barcode scanner, a shotcode, a shotcode scanner, a Uniform Resource Locator (URL), a Uniform Resource Locator (URL) reader, a Near Field Communication (NFC) interface, an infrared interface, a Bluetooth interface, or the like.

As is indicated by claim 3, the second, long range interfacing means may optionally be a Bluetooth interface or IEEE 802.15 interface, a Wireless Local Area Network (WLAN) interface, a Wireless Fidelity (WiFi) interface or IEEE 802.11 interface, a Worldwide Interoperability for Microwave Access (WiMAX) interface or IEEE 802.16 interface, a Wireless Broadband (WiBro) interface, a HomeRF interface, a Global System for Mobile communications (GSM) interface, a Wireless Application Protocol (WAP) interface, a Universal Mobile Telephone System (UMTS) interface, or the like.

### Brief Description of the Drawings

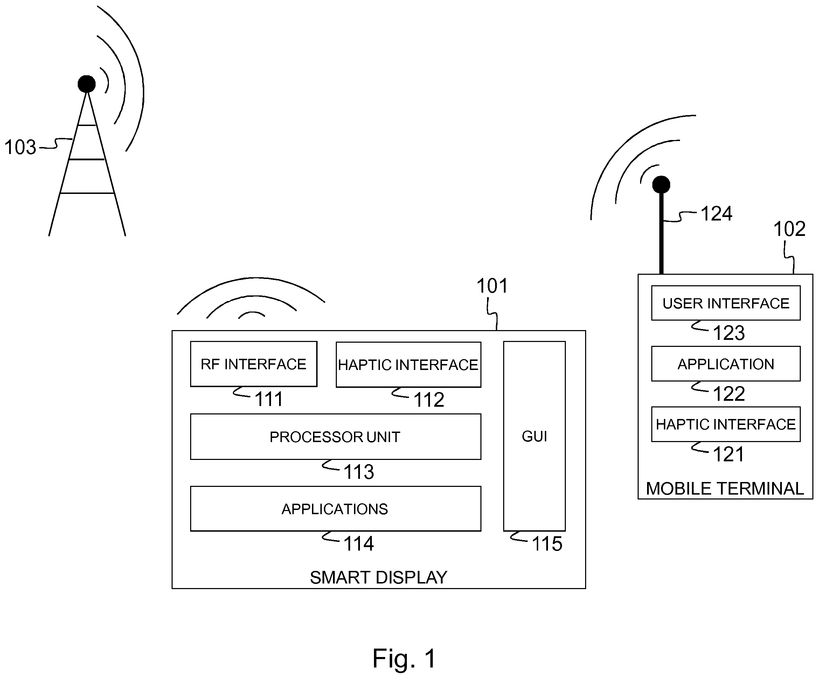

Fig. 1 illustrates an embodiment of the artefact and user terminal according to the present invention.

### Detailed Description of Embodiment(s)

Fig. 1 shows a smart public display 101, a mobile user terminal 102, and a base transceiver station 103 of a mobile network.

The smart display 101 contains an RF interface 111, a haptic interface 112, a processor unit 113, application logic 114 and a graphical user interface 115. The mobile user terminal 102 has a haptic interface 121, application logic 122, a user interface 123 and an RF interface 124. The RF interfaces in the smart display 111 and user terminal 124 can be an interface for GSM, GPRS, UMTS, Bluetooth, WiFi, etc.

When the user of the mobile terminal 102 touches with the haptic interface 121 the corresponding haptic interface 112 of the smart display 101, a short range interactive session is established between the smart display 101 and user terminal 102 and the mobile user terminal 102 becomes associated to the smart display 101.

Once the association is made between the mobile terminal 102 and the smart display 101, the user of the mobile terminal 102 may start walking around. The interactive session with the smart display 101 will be kept, even when the user is out of sight, since the session will be handed over from the haptic interface 112 to the RF interface 111, which is a long range interface that communicates with the RF interface 124 of the mobile terminal 102 via the mobile network represented by the base transceiver station 103 in Fig. 1. Also in the mobile user terminal 102, the interactive session is transferred from the haptic interface 121 to the RF interface 124, and this in synchronism with the handover in the smart display 101. From this moment on, the smart display 101 and the user terminal 102 are engaged in a long range communication session, and the interaction takes place over RF. An application, e.g. of the client-server type like fetching a movie trailer, posting text, sharing the graphical user interface between the user terminal and the smart display, etc. will run over the established interactive communication session, and the user is able to maintain the interactive session, for instance even till he has returned to his/her home or his/her office.

Thanks to the invention, the user of the mobile terminal 102 is offered a clear and intuitive way of entering into an interactive session with the smart display 101. The user can select a smart display from a multiple of displays within his vicinity by simply touching the selected display with the mobile terminal 102, and is able to extend the interaction zone to infinity (e.g. take the interactive session with the smart display home). The invention introduces natural, tactile or haptic aspects in the interaction with smart artefacts, and solves the privacy issue when interacting with public artefacts, like public displays or billboards that according to prior art solutions would automatically interact with the passing user terminal and eventually display personal, private information.

Although the user terminal 102 and the smart display 101 in Fig. 1 are equipped with a haptic or touch-based interface, any short range interface or sensing technology like RFID, infrared, Bluetooth, barcode reading, etc. could be a viable alternative for associating a user terminal with the smart display and establishing an interactive session there between.
A further remark is that the smart display 101 and the mobile phone 102 of Fig. 1 are only examples of the smart artefact and the user terminal according to the present invention. Other examples of smart artefacts are billboards, whiteboards, ambient walls, tables etc. Other examples of user terminals are PDA (Personal Digital Assistants), laptops, remote control devices, etc.
Yet another remark is that long range communication via an RF connection through a base transceiver station was only given as example. The skilled technician will appreciate that variants of the present invention may employ long range communication through hotspots (e.g. WiFi), or through other wireless terminals (e.g. WiFi in ad-hoc mode) in the neighbourhood.

It is also noticed that the smart display, or more generally the smart artefact, and user terminal according to the present invention may comprise more than one short range interface, and more than one long range interface. Plural interfaces increase the chance for compatibility, and the chance to successfully establish an interactive session when for instance one of the interfaces fails. In such case where the user terminal or smart artefact contains plural short range interfaces and/or plural long range interfaces, the terminal or artefact preferably is also equipped with handover means that enable to transfer an interactive communication session from any available short range interface to any available long range interface. When plural long range interfaces are available, the user terminal and smart artefact possibly agree upon the long range communication means that will be used to maintain the interactive session. This may be done during a negotiation cycle.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A user terminal (102) having first interface means (121), active within a short range, for entering into an interactive session with a smart artefact (101),
**characterised in that** said user terminal (102) further has;
second interface means (124), active within a longer range than said short range, for continuing said interactive session with said smart artefact (101).

2. A user terminal (102) according to claim 1, **characterised in that** said user terminal further comprises:
- selection means for selecting said smart artefact (101),

3. A user terminal (102) according to claim 1, **characterised in that** said user terminal further comprises:
- means for transferring said interactive communication session from said first interface means (121) towards said second interface means (124).

4. A user terminal (102) according to claim 1, **characterised in that** said user terminal further is configured to exchange content over said second interface means (124).

5. A user terminal (102) according to claim 1, **characterised in that** said user terminal further is configured to exchange information for controlling information that is made accessible by said smart artefact over said second interface means (124).

6. A user terminal (102) according to claim 1 wherein said interactive session over said first interface means (121) is established when the user terminal (102) and the smart artefact (101) are within proximity of each other.

7. A user terminal (101) according to any preceding claim wherein the first interface means (121) is one or more of:
a touch-based interface;
a Radio Frequency Identification (RFID) tag;
a Radio Frequency Identification (RFID) tag reader;
a barcode;
a barcode scanner;
a shortcode;
a Uniform Resource Locator (URL);
a Uniform Resource Locator (URL) reader;
a Near Field Communication (NFC) interface;
an infrared interface;
a Bluetooth interface.

8. A user terminal (101) according to any preceding claim wherein the second interface means (124) is one or more of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE 802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

9. A smart artefact (101) having first interface means (112), active within a short range, for entering into an interactive session with a user terminal (102), **characterised in that** said smart artefact (101) further has;
second interface means (111), active within a longer range than said short range, for continuing said interactive session with said user terminal (102).

10. A smart artefact (101) according to claim 9, **characterised in that** said user terminal further comprises:
- means for transferring said interactive communication session from said first interface means (112) towards said second interface means (111).

11. A smart artefact (101) according to claim 9 wherein said interactive session over said first interface means (111) is established when the user terminal (102) and the smart artefact (101) are within proximity of each other.

12. A smart artefact (101) according to claims 9 to 11 wherein the smart artefact (101) initiates the interactive session.

13. A smart artefact display device (101) according to claims 9 to 12 wherein the selection of said smart artefact (101) is made by the smart artefact (101) having been touched.

14. A smart artefact (101) according to claims 9 to 13 wherein the first interface means (112) is any one or more of:
a touch-based interface;
a Radio Frequency Identification (RFID) tag;
a Radio Frequency Identification (RFID) tag reader;
a barcode;
a barcode scanner;
a shortcode;
a Uniform Resource Locator (URL);
a Uniform Resource Locator (URL) reader;
a Near Field Communication (NFC) interface;
an infrared interface;
a Bluetooth interface.

15. A smart artefact (101) according to claims 9 to 14 wherein the second interface means (111) is any one of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE 802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

## Patentansprüche

1. Benutzerendgerät (102) mit einem ersten Schnittstellenmittel (121), das in einem Kurzbereich aktiv ist, zum Eintreten in eine interaktive Sitzung mit einem intelligenten Artefakt (101),
**dadurch gekennzeichnet, dass** das Benutzerendgerät (102) ferner aufweist:
ein zweites Schnittstellenmittel (124), das innerhalb eines Bereichs als des kurzen Bereichs aktiv ist, zum Fortsetzen der interaktiven Sitzung mit dem intelligenten Artefakt (101).

2. Benutzerendgerät (102) nach Anspruch 1, **dadurch gekennzeichnet, dass** das Endgerät ferner umfasst:
- Auswahlmittel zum Auswählen des intelligenten Artefakts (101).

3. Benutzerendgerät (102) nach Anspruch 1, **dadurch gekennzeichnet, dass** das Benutzerendgerät ferner umfasst:
- ein Mittel zum Übertragen der interaktiven Kommunikationssitzung vom ersten Schnittstellenmittel (121) auf das zweite Schnittstellenmittel (124).

4. Benutzerendgerät (102) nach Anspruch 1, **dadurch gekennzeichnet, dass** das Benutzerendgerät dazu konfiguriert ist, Inhalte über das zweite Schnittstellenmittel (124) auszutauschen.

5. Benutzerendgerät (102) nach Anspruch 1, **dadurch gekennzeichnet, dass** das Benutzerendgerät ferner dazu konfiguriert ist, Informationen zum Steuern von Informationen, die durch das intelligente Artefakt über das zweite Schnittstellenmittel (124) zugänglich gemacht werden, auszutauschen.

6. Benutzerendgerät (102) nach Anspruch 1, wobei die interaktive Sitzung über das erste Schnittstellenmittel (121) aufgebaut wird, wenn sich das Benutzerendgerät (102) und das intelligente Artefakt (101) in naher Entfernung zueinander befinden.

7. Benutzerendgerät (101) nach einem der vorhergehenden Ansprüche, wobei das erste Schnittstellenmittel (121) eines oder mehrere des Folgenden ist:
eine berührungsbasierte Schnittstelle;
ein Hochfrequenz-Identifikations- (RFID)-Etikett;
ein Hochfrequenz-Identifikations- (RFID)-Etikettenlesegerät;
einen Strichcode;
einen Strichcode-Abtaster;
einen Kurzcode;
einen Uniform Resource Locator (URL);
ein Uniform Resource Locator (URL)-Lesegerät;
eine Nahbereichskommunikations- (NFC)-Schnittstelle;
eine Infrarotschnittstelle;
eine Bluetooth-Schnittstelle.

8. Benutzerendgerät (101) nach einem der vorhergehenden Ansprüche, wobei das zweite Schnittstellenmittel (124) eines oder mehrere des Folgenden ist:
eine Bluetooth-Schnittstelle oder IEEE 802.15-Schnittstelle;
eine Drahtlos-Lokalbereichsnetzwerk (WLAN)-Schnittstelle;
eine Wireless Fidelity (WiFi)-Schnittstelle oder IEEE 802.11-Schnittstelle;
eine Worldwide Interoperability for Microwave Access (WiMAX)-Schnittstelle oder IEEE 802.16-Schnittstelle;
eine Drahtlos-Breitband (WiBro)-Schnittstelle;
eine HomeRF-Schnittstelle;
eine Global System for Mobile Communications (GSM)-Schnittstelle;
eine Wireless Application Protocol (WAP)-Schnittstelle;
eine Universal Mobile Telephone System (UMTS)-Schnittstelle.

9. Intelligentes Artefakt (101) mit einem ersten Schnittstellenmittel (112), das in einem Kurzbereich aktiv ist, zum Eintreten in eine interaktive Sitzung mit einem Benutzerendgerät (102), **dadurch gekennzeichnet, dass** das intelligente Artefakt (101) ferner aufweist:
ein zweites Schnittstellenmittel (111), das innerhalb eines Bereichs als des kurzen Bereichs aktiv ist, zum Fortsetzen der interaktiven Sitzung mit dem Benutzerendgerät (102).

10. Intelligentes Artefakt (101) nach Anspruch 9, **dadurch gekennzeichnet, dass** das Benutzerendgerät ferner umfasst:
- ein Mittel zum Übertragen der interaktiven Kommunikationssitzung vom ersten Schnittstellenmittel (112) auf das zweite Schnittstellenmittel (111).

11. Intelligentes Artefakt (101) nach Anspruch 9, wobei die interaktive Sitzung über das erste Schnittstellenmittel (111) aufgebaut wird, wenn sich das Benutzerendgerät (102) und das intelligente Artefakt (101) in naher Entfernung zueinander befinden.

12. Intelligentes Artefakt (101) nach den Ansprüchen 9 bis 11, wobei das intelligente Artefakt (101) die interaktive Sitzung einleitet.

13. Anzeigevorrichtung des intelligenten Artefakts (101) nach den Ansprüchen 9 bis 12, wobei die Auswahl des intelligenten Artefakts (101) dadurch erfolgt, dass das intelligente Artefakt (101) berührt wurde.

14. Intelligentes Artefakt (101) nach den Ansprüchen 9 bis 13, wobei das erste Schnittstellenmittel (112) eines oder mehrere des Folgenden ist:
eine berührungsbasierte Schnittstelle;
ein Hochfrequenz-Identifikations- (RFID)-Etikett;
ein Hochfrequenz-Identifikations- (RFID)-Etikettenlesegerät;
einen Strichcode;
einen Strichcode-Abtaster;
einen Kurzcode;
einen Uniform Resource Locator (URL);
ein Uniform Resource Locator (URL)-Lesegerät;
eine Nahbereichskommunikations- (NFC)-Schnittstelle;
eine Infrarotschnittstelle;
eine Bluetooth-Schnittstelle.

15. Intelligentes Artefakt (101) nach den Ansprüchen 9 bis 14, wobei das zweite Schnittstellenmittel (111) eines des Folgenden ist:
eine Bluetooth-Schnittstelle oder IEEE 802.15-Schnittstelle;
eine Drahtlos-Lokalbereichsnetzwerk (WLAN)-Schnittstelle;
eine Wireless Fidelity (WiFi)-Schnittstelle oder IEEE 802.11-Schnittstelle;
eine Worldwide Interoperability for Microwave Access (WiMAX)-Schnittstelle oder IEEE 802.16-Schnittstelle;
eine Drahtlos-Breitband (WiBro)-Schnittstelle;
eine HomeRF-Schnittstelle;
eine Global System for Mobile Communications (GSM)-Schnittstelle;
eine Wireless Application Protocol (WAP)-Schnittstelle;
eine Universal Mobile Telephone System (UMTS)-Schnittstelle.

## Revendications

1. Terminal d'utilisateur (102) comportant un premier moyen d'interface (121), actif à courte portée, permettant d'entrer dans une session interactive avec un artéfact intelligent (101),
**caractérisé en ce que** ledit terminal d'utilisateur (102) comporte en outre :
un second moyen d'interface (124), actif à une portée plus longue que ladite courte portée, permettant de poursuivre ladite session interactive avec ledit artéfact intelligent (101).

2. Terminal d'utilisateur (102) selon la revendication 1, **caractérisé en ce que** ledit terminal d'utilisateur comprend en outre :
- un moyen de sélection permettant de sélectionner ledit artéfact intelligent (101).

3. Terminal d'utilisateur (102) selon la revendication 1, **caractérisé en ce que** ledit terminal d'utilisateur comprend en outre :
- un moyen permettant de transférer ladite session de communication interactive, dudit premier moyen d'interface (121) vers ledit second moyen d'interface (124).

4. Terminal d'utilisateur (102) selon la revendication 1, **caractérisé en ce que** ledit terminal d'utilisateur est en outre configuré pour échanger des contenus sur ledit second moyen d'interface (124)

5. Terminal d'utilisateur (102) selon la revendication 1, **caractérisé en ce que** ledit terminal d'utilisateur est en outre configuré pour échanger des informations afin de contrôler des informations qui sont rendues accessibles par ledit artéfact intelligent sur ledit second moyen d'interface (124).

6. Terminal d'utilisateur (102) selon la revendication 1, dans lequel ladite session interactive sur ledit premier moyen d'interface (121) est établie lorsque le terminal d'utilisateur (102) et l'artéfact intelligent (101) sont à proximité l'un de l'autre.

7. Terminal d'utilisateur (101) selon l'une quelconque des revendications précédentes, dans lequel le premier moyen d'interface (121) est un ou plusieurs des éléments suivants :
une interface tactile ;
une étiquette d'identification par radiofréquence (RFID, *radio frequency identification*) ;
un lecteur d'étiquettes d'identification par radiofréquence (RFID) ;
un code à barres ;
un lecteur de codes à barres ;
un numéro abrégé ;
un localisateur uniforme de ressource (URL, *uniform resource locator*) ;
un lecteur de localisateurs uniformes de ressources (URL) ;
une interface de communication en champ proche (NFC, *near field communication*) ;
une interface infrarouge ;
une interface *Bluetooth.*

8. Terminal d'utilisateur (101) selon l'une quelconque des revendications précédentes, dans lequel le second moyen d'interface (124) est un ou plusieurs des éléments suivants :
une interface *Bluetooth* ou une interface selon IEEE 802.15 ;
une interface réseau local sans fil (WLAN, *wireless local area network*) ;
une interface *Wireless Fidelity* (WiFi, fidélité sans fil) ou une interface selon IEEE 802.11 ;
une interface d'interopérabilité mondiale des accès d'hyperfréquence (WiMAX, *worldwide interoperability for microwave access*) ou une interface selon IEEE 802.16 ;
une interface large bande hertzienne (WiBro, *wireless broadband*) ;
une interface HomeRF ;
une interface *Global System for Mobile communications* (GSM, système mondial de communication avec les mobiles) ;
une interface *Wireless Application Protocol* (WAP, protocole d'application sans fil) ;
une interface *Universal Mobile Telephone System* (UMTS, système universel de téléphonie mobile).

9. Artéfact intelligent (101) comportant un premier moyen d'interface (112), actif à courte portée, permettant d'entrer dans une session interactive avec un terminal d'utilisateur (102), **caractérisé en ce que** ledit artéfact intelligent (101) comporte en outre :
- un second moyen d'interface (111), actif à une portée plus longue que ladite courte portée, permettant de poursuivre ladite session interactive avec ledit terminal d'utilisateur (102).

10. Artéfact intelligent (101) selon la revendication 9, **caractérisé en ce que** ledit terminal d'utilisateur comprend en outre :
- un moyen permettant de transférer ladite session de communication interactive, dudit premier moyen d'interface (112) vers ledit second moyen d'interface (111).

11. Artéfact intelligent (101) selon la revendication 9, dans lequel ladite session interactive sur ledit premier moyen d'interface (111) est établie lorsque le terminal d'utilisateur (102) et l'artéfact intelligent (101) sont à proximité l'un de l'autre.

12. Artéfact intelligent (101) selon les revendications 9 à 11, dans lequel l'artéfact intelligent (101) entame la session interactive.

13. Dispositif d'affichage d'artéfact intelligent (101) selon les revendications 9 à 12, dans lequel la sélection dudit artéfact intelligent (101) est faite par l'artéfact intelligent (101) ayant été touché.

14. Artéfact intelligent (101) selon les revendications 9 à 13, dans lequel le premier moyen d'interface (112) est un ou plusieurs des éléments suivants :
une interface tactile ;
une étiquette d'identification par radiofréquence (RFID, *radio frequency identification*) ;
un lecteur d'étiquettes d'identification par radiofréquence (RFID) ;
un code à barres ;
un lecteur de codes à barres ;
un numéro abrégé ;
un localisateur uniforme de ressource (URL, *uniform resource locator*) ;
un lecteur de localisateurs uniformes de ressources (URL) ;
une interface de communication en champ proche (NFC, *near field communication*) ;
une interface infrarouge ;
une interface *Bluetooth.*

15. Artéfact intelligent (101) selon les revendications 9 à 14, dans lequel le second moyen d'interface (111) est un des éléments suivants :
une interface *Bluetooth* ou une interface selon IEEE 802.15 ;
une interface réseau local sans fil (WLAN, *wireless local area network*) ;
une interface *Wireless Fidelity* (WiFi, fidélité sans fil) ou interface selon IEEE 802.11 ;
une interface d'interopérabilité mondiale des accès d'hyperfréquence (WiMAX, *Worldwide Interoperability for Microwave Access*) ou interface selon IEEE 802.16 ;
une interface large bande hertzienne (WiBro, *wireless broadband*) ;
une interface HomeRF ;
une interface *Global System for Mobile communications* (GSM, système mondial de communication avec les mobiles) ;
une interface *Wireless Application Protocol* (WAP, protocole d'application sans fil) ;
une interface *Universal Mobile Telephone System* (UMTS, système universel de téléphonie mobile).
